# NOUVEAU FASCICULE DE BREVET EUROPEEN

(11) **EP 0 592 337 B2**
(45) Date de publication et mention de la décision concernant l'opposition: **02.10.2002**
(45) Mention de la délivrance du brevet: 27.11.1996
(21) Numéro de dépôt: 93420389.4
(22) Date de dépôt: 29.09.1993
(51) Int. Cl.: H02H 3/34, H02H 3/093

(54) **Déclencheur électronique comportant une protection terre**
Elektronischer Auslöser mit Erdschutz
Electronic trip device comprising earth protection

(30) Priorité: 05.10.1992 FR 9211986
(43) Date de publication de la demande: 13.04.1994
(73) Titulaire: Schneider Electric Industries SAS, 92500 Rueil-Malmaison (FR)
(72) Inventeur: Del Vecchio, Alain, F-38050 Grenoble Cédex 09 (FR); Ferrazzi, Marc, F-38050 Grenoble Cédex 09 (FR)
(74) Mandataire: Jouvray, Marie-Andrée

(56) Documents cités:
- EP-A- 0 179 017
- EP-A- 0 284 198
- FR-A- 2 212 667
- US-A- 4 947 126

## Description

L'invention concerne un déclencheur électronique pour disjoncteur électrique multipolaire de protection d'un réseau électrique selon le préambule de la revendication 1.

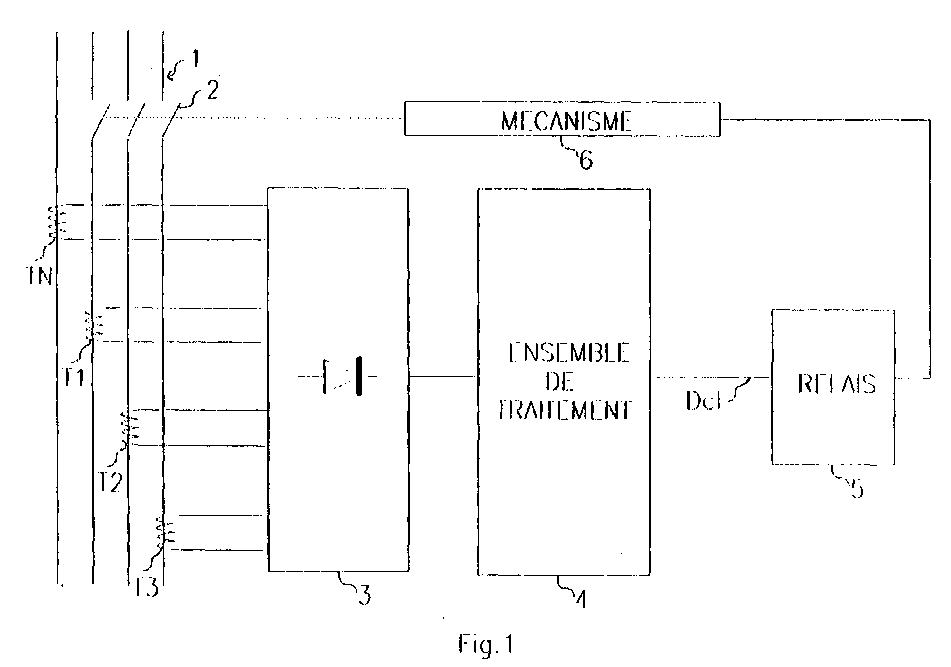

Les disjoncteurs électroniques comportant une fonction de protection contre les défauts terre utilisent des circuits de mesure ou de reconstitution du signal courant homopolaire. La figure 1 représente un disjoncteur de type connu. Un réseau électrique 1 à protéger est composé de conducteurs électriques, correspondant généralement aux trois phases et au neutre d'une installation. Des contacts 2 permettent d'établir ou d'interrompre le courant dans les conducteurs de phase. Sur la figure comme dans une grande partie des installations, le conducteur de neutre est distnbué sans être coupé. Des transformateurs de courant T1, T2, T3, et TN associés aux différents conducteurs du réseau transforment les courants primaires de forte valeur en courants secondaires compatibles avec les déclencheurs électroniques. Les courants secondaires sont appliqués à l'entrée d'un circuit 3 de redressement et de détection des courants de phase, de neutre et de défaut terre. Ce circuit fournit des signaux représentatifs de ces courants à un ensemble électronique 4 de traitement. Un ordre de déclenchement Dc1 produit par l'ensemble de traitement 4 est appliqué à l'entrée d'un relais de commande 5 qui actionne un mécanisme 6 d'ouverture des contacts 2 du disjoncteur.

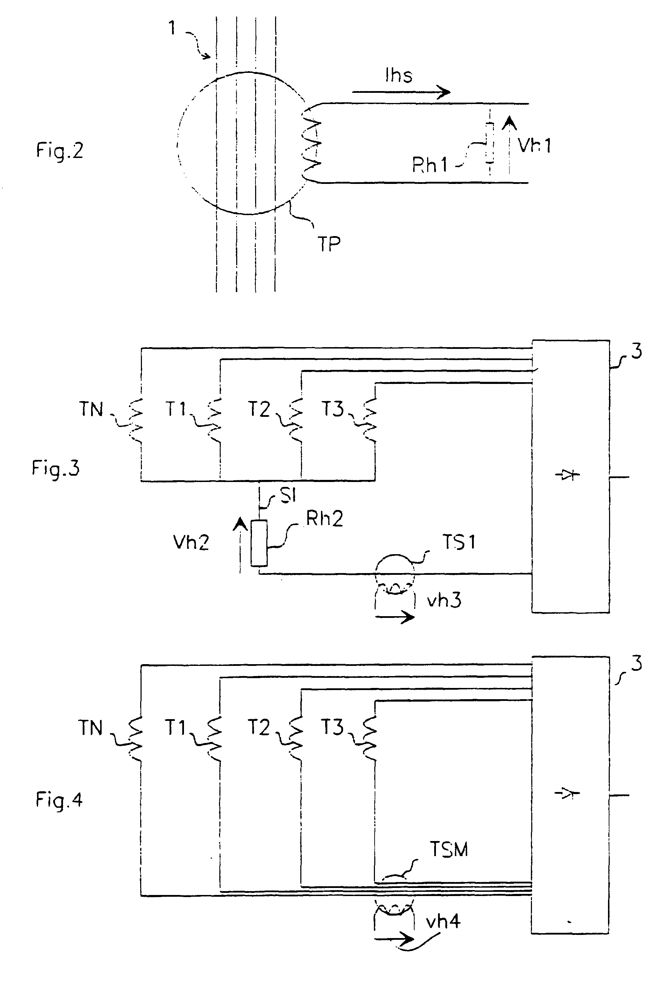

Dans certains déclencheurs de type connu la mesure du courant de défaut terre est réalisée au moyen d'un transformateur Tp représenté à la figure 2 (EP-A-284 198). Le primaire du transformateur est constitué par tous les conducteurs du réseau électrique 1 et un enroulement secondaire foumit un courant lhs proportionnel au courant homopolaire du réseau. Un signal représentatif de ce courant secondaire lhs peut être fourni par la tension Vh1 aux bornes d'une résistance RhI connectée en parallèle sur l'enroulement secondaire du transformateur. La figure 3 représente un schéma de reconstitution d'un signal représentatif d'un défaut terre à partir des courants secondaires des transformateurs de courant TN, T1, T2, et T3. La somme des courants secondaires est obtenue dans un conducteur commun SI auquel est relié une première extrémité de chacun des enroulements secondaires des transformateurs de courant, les secondes extrémités de ces enroulements étant connectées directement au circuit de redressement 3. Le conducteur commun SI est relié à travers des moyens de mesure au circuit de redressement. Un courant représentatif du courant de défaut terre, correspondant à la somme des courants secondaires de tous les transformateurs, circule dans le conducteur SI. Les moyens de mesure peuvent être constitués par une résistance Rh2, la tension Vh2 aux bornes de cette résistance étant représentative du courant homopolaire. Des moyens de mesure alternatifs sont également représentés à la figure 3 sous la forme d'un transformateur TS1 dont l'enroulement primaire est constitué par le conducteur SI. Latension de mesure Vh3 aux bornes de l'enroulement secondaire du transformateur TS1 est également représentative du courant homopolaire.

Dans les déclencheurs utilisant la valeur efficace des courants, une indépendance totale des courants est nécessaire. Un dispositif selon le schéma de la figure 4 permet cette indépendance. Dans ce mode de réalisation les deux extrémités de l'enroulement secondaire de chaque transformateur de courant (T1, T2, T3, TN) sont connectées au circuit de redressement. L'ensemble de ces enroulements secondaires constitue le primaire d'un transformateur TSM qui fournit aux bornes de son enroulement secondaire une tension de mesure Vh4 représentative du courant homopolaire dans le réseau.

Les signaux Vh1, Vh2, Vh3, ou Vh4 sont ensuite appliqués à l'ensemble du traitement 4. Dans d'autres déclencheurs, des circuits de traitement numériques calculent une valeur représentative du défaut terre en fonction des amplitudes des valeurs des courants des phases et du neutre comme dans la demande de brevet EP-A-0 179 017.

Le document US 4 947 126 décrit un dispositif de mesure dans lequel une information de polarité est présentée en vue de réaliser une protection terre.

Les dispositifs de protection terre connus utilisent, pour la reconstitution du signal de défaut terre, des composants électroniques occupant un volume important sur les cartes de circuit imprimé. Ces composants sont souvent des transformateurs, des diodes ou des résistances de puissance suivis d'amplificateurs de mise en forme. Le coût et le volume de ces composants supplémentaires sont très élevés pour les déclencheurs électroniques installés sur des disjoncteurs ayant un bas calibre.

Les déclencheurs à traitement numérique réduisent le nombre de ces composants de puissance mais des circuits échantillonneurs/bloqueurs sont nécessaires à la mesure simultanée des valeurs des courants. De plus les algorithmes connus de calcul de la valeur du courant de défaut terre ne sont pas adaptés à toutes les configurations des courants de phase et de neutre, notamment lorsque ces courants ne sont pas de forme sinusoidale pure.

L'invention a pour but un déclencheur électronique comportant des composants occupant une place réduite et des circuits de traitement pouvant reconstituer la valeur du courant de défaut terre dans toutes les configurations des courants de phase et de neutre.

Un déclencheur selon l'invention est défini dans la revendication 1.

Selon un mode de réalisation de l'invention, le circuit de détection et de redressement comporte un groupe de diodes associées à chaque capteur de courant, connectées en pont redresseur, une première et une seconde diode reliées par leurs cathodes à un point positif d'une alimentation, une troisième et une quatrième diodes connectées par leurs anodes à une résistance de mesure, la première et la troisième diodes étant connectées en série et leur point commun étant connecté à une première sortie du capteur de courant associé, la deuxième et la quatrième diodes étant connectées en série et leur point commun étant connecté à une seconde sortie du capteur de courant associé, une des deux sorties du capteur de courant étant reliée aux moyens de détection du signe du courant circulant dans ledit capteur, lesdits moyens de détection fournissant en sortie une première valeur si le signe du courant est positif ou une seconde valeur si le signe du courant est négatif, le point commun entre la troisième diode, la quatrième diode et la résistance de mesure fournissant un signal représentatif de la valeur absolue du courant.

Selon un mode de développement de l'invention, les moyens de détection des signes des courants comportent, pour chaque capteur, un transistor comportant une électrode de référence connectée à la masse d'une alimentation, une électrode de commande reliée au capteur de courant associé et une électrode de sortie reliée à un circuit électronique de traitement.

Dans un mode préférentiel de réalisation l'ensemble électronique de traitement détermine une valeur instantanée du courant homopolaire en ajoutant les valeurs des courants des capteurs dont le signe correspondant est positif et en soustrayant les valeurs des courants des capteurs dont le signe correspondant est négatif.

Selon un mode particulier de réalisation l'ensemble électronique de traitement comporte des moyens de conversion analogique/numérigue de manière à échantillonner les valeurs des courants des capteurs, des moyens de calcul pour déterminer la valeur d'un échantillon du courant de défaut terre, et des moyens de production d'un signal de déclenchement lorsque la valeur du courant de défaut terre dépasse un seuil pendant un temps prédéterminé.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
La figure 5 représente le schéma d'un déclencheur selon l'invention.
La figure 6 montre le schéma d'un mode de réalisation de l'ensemble de traitement du déclencheur selon la figure 5.
La figure 7 représente un mode de réalisation particulier du circuit de traitement de l'ensemble selon la figure 6.
La figure 8 montre un algorithme de détermination de la valeur du courant de défaut terre.
Les figures 9 et 10 illustrent des courants déformés et les signaux des signes correspondants.

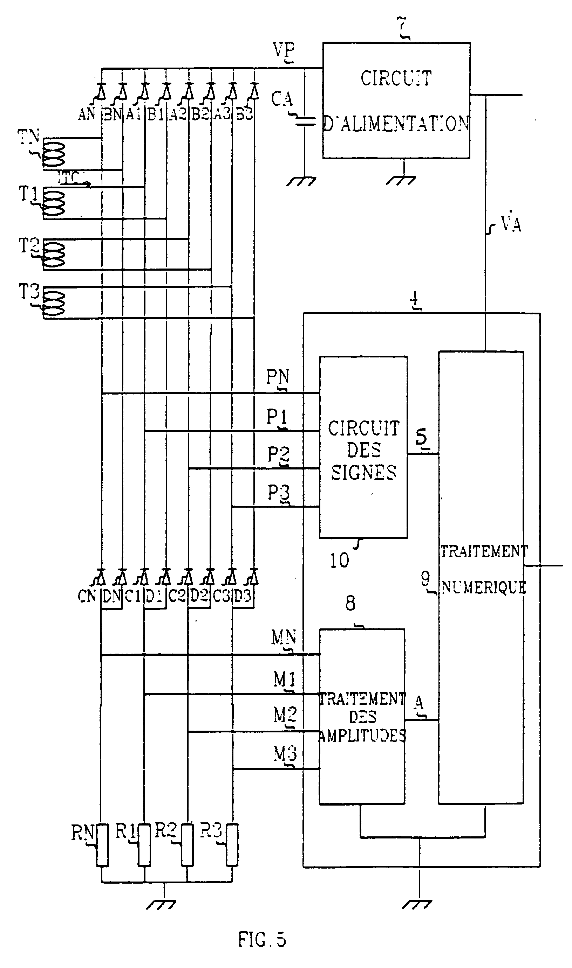

L'invention comporte dans l'ensemble de traitement 4 des moyens de détermination de la valeur du courant de défaut terre sans utiliser de composants volumineux. Le schéma d'un déclencheur selon un mode de réalisation de l'invention est représenté à la figure 5. Chaque enroulement secondaire des transformateurs de courant est connecté à un pont redresseur représenté par un groupe de quatre diodes. Pour chaque transformateur de courant T1, T2, T3, TN une première extrémité P1, P2, P3, PN de l'enroulement secondaire est reliée à l'anode d'une première diode associée A1, A2, A3 ou AN et à la cathode d'une seconde diode associée C1, C2, C3 ou CN tandis que une seconde extrémité de l'enroulement secondaire de T1, T2, T3, ou TN est reliée à l'anode d'une troisième diode B1, B2, B3 ou BN et à la cathode d'une quatrième diode associée D1, D2, D3 ou DN. Les cathodes des premières et troisièmes diodes A1, A2, A3, AN, B1, B2, B3 et BN sont reliées à une ligne d'alimentation positive Vp. Les anodes des secondes et quatrièmes diodes associées à un enroulement secondaire (C1, D1, C2, D2, C3, D3, CN, DN) sont connectées à une première borne d'une résistance de mesure associée (R1, R2, R3, RN), l'autre borne de chacune des résistances de mesure étant connectée à une masse de référence électrique du déclencheur. La ligne d'alimentation positive Vp charge un condensateur CA et fournit une tension d'entrée à un circuit 7 d'alimentation. Le circuit foumit une tension VA régulée pour l'alimentation du déclencheur. Les premières bornes des résistances R1, R2, R3, RN sont connectées par des conducteurs M1, M2, M3, MN aux entrées d'un circuit 8 de traitement des amplitudes. La sortie du circuit 8 fournit à un circuit de traitement numérique 9 des signaux redressés A représentatifs des valeurs absolues des courants du réseau à protéger.
La première extrémité de chaque transformateur de courant T1, T2, T3, TN est connectée par un conducteur P1, P2, P3, PN à l'entrée d'un circuit 10 de détection des signes des courants. Ce circuit 10 fournit sur une sortie S, pour chaque entrée, une première valeur si le signe du courant est positif et une seconde valeur si le signe du courant est négatif. La sortie S du circuit est connectée au circuit 9 de traitement numérique.

Lorsqu'un courant ITC1 de polarité positive circule dans l'enroulement secondaire du transformateur T1, il passe par la diode A1 pour charger le condensateur CA et alimenter le déclencheur à travers le circuit 7. Le retour du courant se fait par la masse et la résistance de mesure R1, puis à travers la diode D1 et la seconde extrémité du secondaire du transformateur. La présence de courant positif porte la tension du conducteur P1 à une valeur supérieure à OV. Le circuit de détection des signes détecte cette tension et fournit sur sa sortie une première valeur représentative de la polarité positive de ITC1. La tension mesurée aux bornes de la résistance R1, entre le conducteur M1 et la masse a une tension négative. Si le courant ITC1 est de polarité négative, la seconde extrémité du secondaire du transformateur a une tension positive. Le courant passe par la diode B1 pour charger CA et alimenter le déclencheur, le retour se fait par la résistance de mesure R1 et la diode C1. La tension de mesure R1 entre M1 et la masse est toujours négative alors que la tension en P1 devient négative et le circuit de détection des signes fournit en sortie une seconde valeur, représentative de la polarité négative de ITC1. Les courants circulant dans les autres secondaires des transformateurs de courant (TN, T2, T3) et dirigés par les diodes de redressement associées produisent les mêmes effets sur le circuit 10 de détection des signes et les entrées du circuit 8 de traitement des amplitudes.

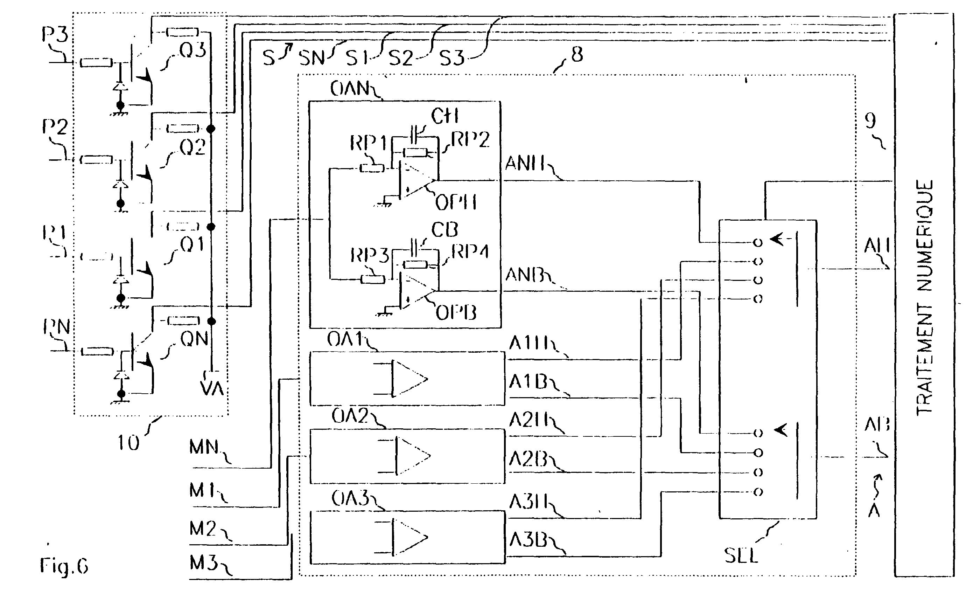

Le schéma d'un mode de réalisation de l'ensemble de traitement 4 est représenté à la figure 6. Le circuit de détection des signes comporte quatre transistors Q1, Q2, Q3, QN comportant chacun un émetteur connecté à la masse de référence, un collecteur connecté à la tension d'alimentation VA par l'intermédiaire d'une résistance de polarisation associée et une base connectée respectivement à un des conducteurs P1, P2, P3, PN, par l'intermédiaire de résistances de limitation. Des diodes de protection contre les tensions inverses sont connectées entre l'émetteur et la base de chaque transistor. La sortie S du détecteur de signe comporte quatre lignes, respectivement S1, S2, S3, SN, connectées aux collecteurs des transistors respectivement Q1, Q2, Q3, QN et au circuit 9 de traitement numérique. L'application d'une tension positive sur une entrée du circuit de détection 10 provoque la conduction et la saturation du transistor correspondant pour fournir sur la sortie correspondante une première valeur de tension proche de 0V. lorsque la tension appliquée sur une entrée n'est pas positive, le transistor correspondant est bloqué et la sortie correspondante fournit une seconde valeur de tension proche de la valeur de l'alimentation VA.

Le circuit 8 de traitement des amplitudes représenté sur la figure 6 comporte quatre groupes d'amplification OAN, OA1, OA2, OA3 et un sélecteur SEL. Chaque groupe comporte deux amplificateurs opérationnels branchés en amplificateurs inverseurs qui amplifient et rendent positifs les signaux d'entrée fournis par les conducteurs MN, M1, M2, M3 représentatifs de la tension aux bornes des résistances de mesure RN, R1, R2, R3. Les deux amplificateurs ont des gains différents pour permettre une grande dynamique de mesure. Par exemple, pour le groupe OAN un premier amplificateur OPH amplifie les signaux de forte amplitude avec un faible gain alors qu'un second amplificateur OPB amplifie les faibles signaux avec un gain élevé. Des résistances de polarisation et de contre réaction, RP1 connectée entre le conducteur MN et l'entrée inverseuse de OPH, RP2 connectée entre l'entrée inverseuse et la sortie ANH de OPH, RP3 connectée entre le conducteurs NM et l'entrée inverseuse de OPB et RP4 connectée entre l'entrée inverseuse et la sortie ANB de OPB fixent la valeur des gains. Des condensateurs CH et CB connectés entre les entrées inverseuses et les sorties des amplificateurs respectivement OPH et OPB limitent la bande passante et réduisent les parasites. Les sorties ANH et ANB des amplificateurs sont reliées à un circuit de sélection SEL. Les groupes d'amplification OA1, OA2, OA3 sont constitués de la même façon que le groupe OAN, des sorties A1H, A2H, A3H correspondent à la sortie ANH, et des sorties A1 B, A2B, A3B correspondent à la sortie ANB. On obtient ainsi, en sortie du circuit 10 et des groupes d'amplification OA1, OA2, OA3 et OAN, en parallèle, des signaux analogiques représentatifs des amplitudes de tous les courants du réseau et des signaux numériques représentatifs des signes correspondants. Le circuit de sélection SEL comporte deux sélecteurs électroniques. Le premier sélectionne séquentiellement sous contrôle du circuit 9, un signal AH parmi les quatre signaux ANH, A1H, A2H ou A3H correspondant aux fortes amplitudes et le second sélectionne séquentiellement sous contrôle du circuit 9, un signal AB parmi les quatre signaux ANB, A1B, A2B ou A3B correspondant aux faibles amplitudes. Les signaux sélectionnés AH et AB sont appliqués au circuit 9 de traitement numérique.

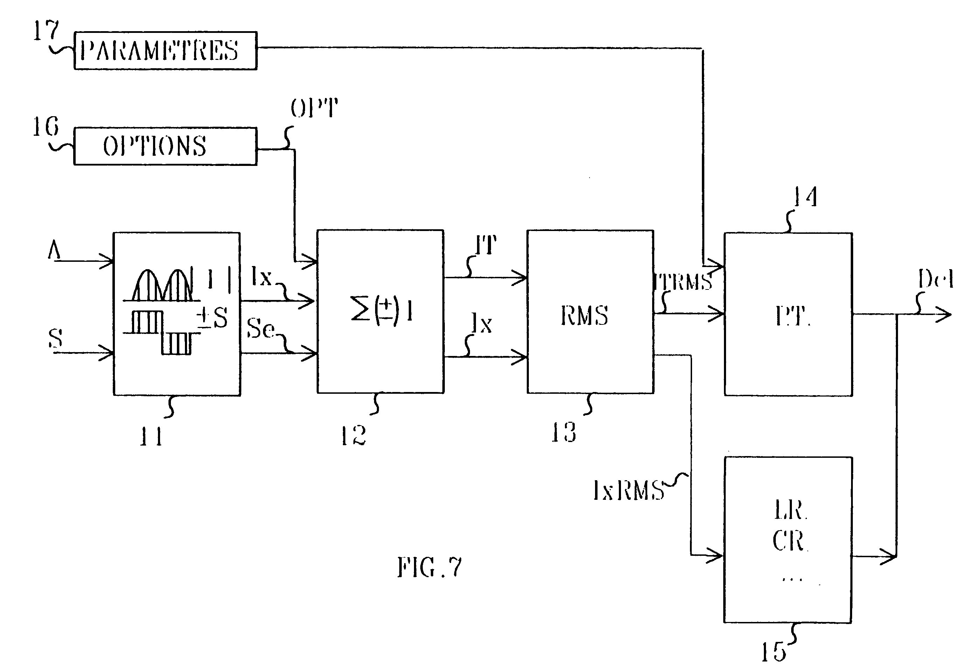

La figure 7 montre une architecture particulière du circuit de traitement numérique 9. Des moyens 11 font la lecture, l'échantillonnage et la conversion numérique des valeurs absolues des courants et des signes. Ces valeurs numériques des courants I1, I2, I3, IN représentées par Ix et des signes S1, S2, S3, SN représentées par Se sont appliquées à des moyens 12 de calcul des valeurs instantanées. Une entrée de configuration d'option 16 informe par la ligne OPT les moyens 12 si une protection terre de type résiduelle est à effectuer ou si la protection terre n'est pas activée sur le déclencheur. Si une protection terre de type résiduelle est sélectionnée, les moyens 12 calculent une valeur représentative de la somme vectorielle des courants. Selon un mode de réalisation de l'invention cette valeur est obtenue en additionnant les échantillons de courant dont le signe correspondant est positif et en soustrayant les échantillons de courant dont le signe correspondant est négatif. Des sorties des moyens 12 fournissent respectivement les quatre valeurs Ix des échantillons des courants mesurés en valeur absolue, et la valeur calculée IT d'un courant homopolaire obtenu par une sommation vectorielle. Ces valeurs instantanées sont ensuite traitées par des moyens 13 de calcul des valeurs efficaces des courants de phase et de neutre IxRMS, et du courant homopolaire ITRMS. Le courant efficace homopolaire est fourni à l'entrée de moyens 14 de traitement de la protection terre. Des moyens de réglage 17 fournissent aux moyens 14 de traitement des paramètres tels que des valeurs de seuil et de temporisation. Lorsqu'un défaut terre dépasse un seuil pendant un temps prédéterminé les moyens 14 donnent en sortie un ordre de déclenchement Dc1. Les valeurs efficaces des courant IxRMS de phase et de neutre sont appliquées à des moyens 15 de traitement des autres fonctions de déclenchement, notamment des fonctions dites long-retard et court-retard.

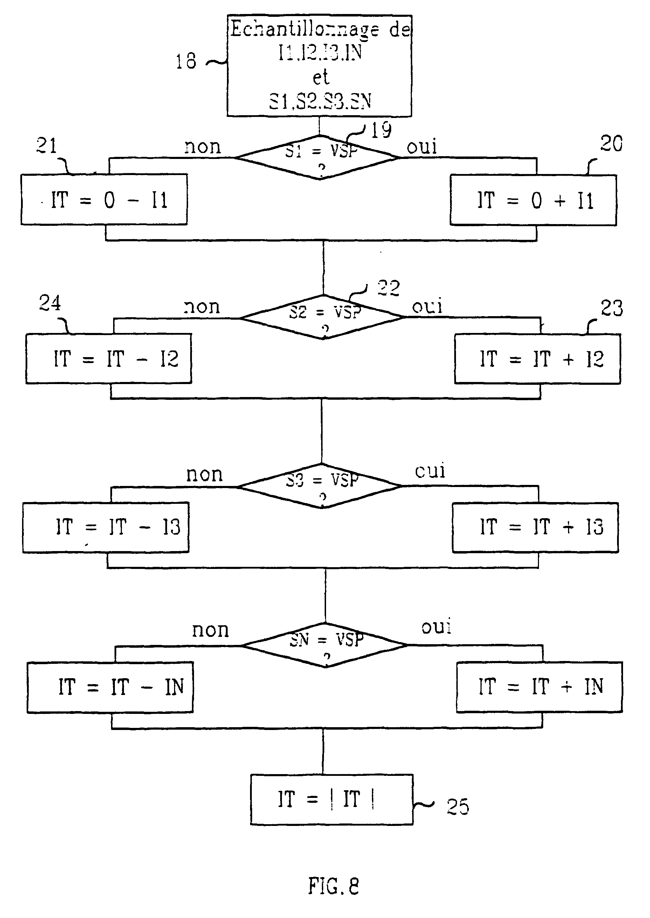

Les moyens représentés à la figure 7 peuvent être réaiisés aussi bien sous la forme de circuits câblés que sous la forme de fonctions programmées dans un microprocesseur. La figure 8 illustre un algorithme de calcul de la valeur du courant de défaut terre pouvant être utilisé dans ce cas. Pendant une étape 18 le circuit de traitement numérique échantillonne les valeurs représentatives des courants redressés I1, 12, 13, IN et les valeurs représentatives des signes S1, S2, S3, SN. Pour chaque valeur du courant, l'amplitude et le signe correspondants sont échantillonnés simultanément. Pendant chaque étape d'échantillonnage le temps séparant l'échantillonnage de deux courants correspondant à deux conducteurs de phase différents, I1, 12 doit être suffisamment faible pour ne pas introduire d'erreur. Par exemple un temps d'échantillonnage de 16 µS permet d'avoir une erreur inférieure à 1 %.

Si la valeur de S1 prend une valeur VSP représentant une tension positive du conducteur P1, la comparaison 19 oriente le traitement vers une étape de calcul 20 où une grandeur IT représentative d'un courant de défaut terre prend la valeur de I1 (0+I1), la valeur initiale IT étant nulle. Dans le cas contraire, dans une étape 21, IT prend une valeur - I1 (0-I1). Ensuite une comparaison 22 oriente le traitement, si le signe du courant 12 est positif, vers une étape 23 qui ajoute la valeur de 12 à la valeur de IT précédente (IT= IT+I2). Si le signe de 12 est négatif une étape 24 soustrait la valeur de 12 à la valeur de IT précédente (IT=IT-12). Le traitement est identique pour la phase 3 et le neutre. Si S3 est représentatif d'un signe positif de 13, IT=IT+I3, sinon IT=IT-I3, et si le signe SN de IN est positif IT=IT+IN sinon IT=IT-IN. A la fin de l'algorithme une étape 25 transforme la valeur de IT signée en valeur absolue non signée représentative d'un courant de défaut terre redressé. Une valeur nulle de IT indique que le réseau à protéger ne comporte pas de défaut terre. La valeur de IT est ensuite transmise vers les moyens 13 de calcul de la valeur efficace.

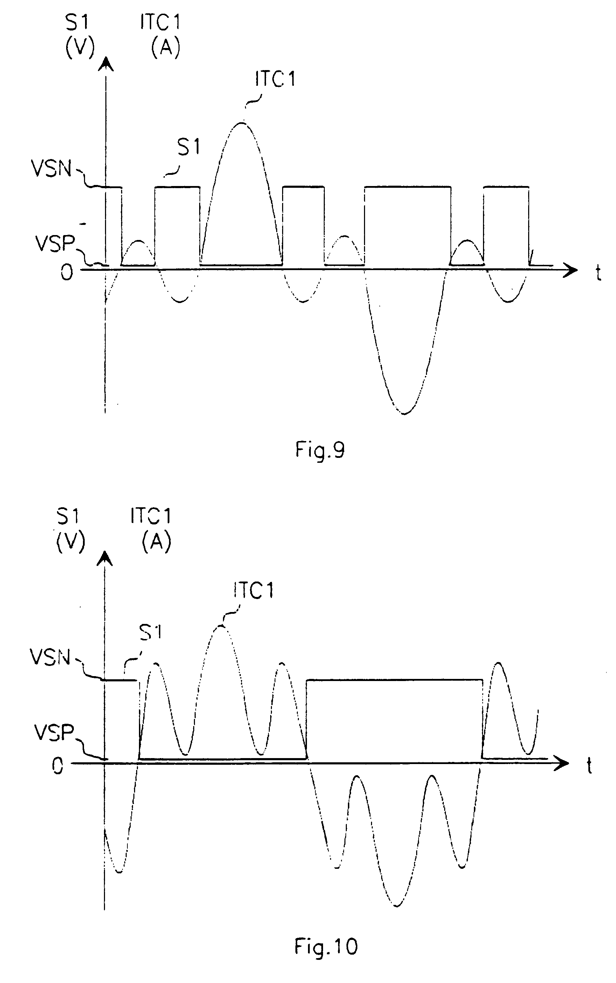

La détection des signes des courants circulant dans les secondaires des transformateurs de courants est bien adaptée aux courants déformés. La figure 9 représente la détection du signe d'un courant ITC1 déformé présentant un taux important de troisième harmonique. Lorsque le signe du courant ITC1 est négatif le signal S1 de détection du signe a une première valeur VSN, et lorsque le courant ITC1 passe au-dessus de zéro la valeur du signal S1 passe à une seconde valeur VSP. Le courant ITC1 de la figure 10 a un taux de troisième harmonique moins élevé que celui de la figure 9. Les passages par zéro sont moins fréquents et la période de détection du signe correspond à la période de changement de signe de la période fondamentale du réseau. Dans les deux cas l'utilisation du signe et de l'amplitude pour former la somme vectorielle permet d'obtenir une valeur satisfaisante du courant homopolaire.

Dans le mode de réalisation préférentiel décrit ci-dessus le circuit de détection 10 des signes comporte des transistors bipolaires, mais cette détection peut être effectuée par tout autre moyen, notamment des comparateurs, des amplificateurs opérationnels, des transistors à effet de champ ou des circuits logiques. La détection peut aussi être intégrée au circuit de traitement 9. Le circuit de traitement des amplitudes comporte 4 groupes d'amplification dont chacun est composé par deux amplificateurs opérationnels afin d'avoir une bonne précision sur une grande dynamique de mesure. Cependant dans la plupart des déclencheurs un seul amplificateur par groupe est suffisant. Selon un autre mode de réalisation de l'invention non représenté, le déclencheur ne comporte pas d'amplificateur, un convertisseur analogique/numérique convertit directement les tensions négatives, présentes sur les conducteurs MN, M1, M2, M3, fournies par les résistances de mesure. Le circuit de sélection SEL peut être intégré à un circuit de conversion, à plusieurs entrées analogiques. Les résistances de mesures sont mises entre les cathodes des diodes de redressement CN, DN, C1, D1, C2, D2, C3, D3 et la masse, mais elle pourraient de la même manière être placées entre les anodes des diodes AN, BN, A1, B1, A2, B2, A3, B3 et le point d'alimentation positif VP. Les entrées connectées aux conducteurs PN, P1, P2, P3 pour la détection des signes peuvent être connectées à l'une quelconque des extrémités des enroulements des transformateurs de courant, respectivement TN, T1, T2, T3. Les traitements décrits dans les modes de réalisation préférentiels sont numériques, bien que d'autres modes de réalisation de l'invention puissent comporter des traitements analogiques pour le calcul de la valeur représentative d'un courant de défaut terre.

## Revendications

1. Déclencheur électronique pour disjoncteur électrique multipolaire de protection d'un réseau électrique comportant :
- un capteur de courant par pôle fournissant un courant secondaire proportionnel à un courant parcourant un conducteur associé du réseau (1) protégé par le disjoncteur,
- un circuit (3) de détection et de redressement auquel sont appliqués les courants secondaires et fournissant des signaux représentatifs des courants parcourant les conducteurs à protéger,
- des moyens pour déterminer une valeur d'un signal de courant homopolaire en fonction desdits courants secondaires, et
- un ensemble électronique de traitement (4) recevant les signaux fournis par le circuit de détection et de redressement et délivrant un ordre de déclenchement, avec ou sans retard, lorsque les courants parcourant les conducteurs à protéger ou un courant homopolaire dépassent des seuils prédéterminés,
déclencheur électronique **caractérisé en ce que** le circuit (3) de détection et de redressement comporte des moyens pour fournir séparément à l'ensemble (4) de traitement des signaux (M1, M2, M3, MN) représentatifs des courants secondaires redressés et des signaux (P1, P2, P3, PN) représentatifs des signes des polarités desdits courants secondaires , l'ensemble électronique de traitement comportant des moyens (10) de détection des signes du courant connectés au circuit (3) de détection et de redressement de manière à recevoir les signaux représentatifs des signes de polarité des courants, un circuit (9) de traitement numérique connecté à des sorties (S) desdits moyens (10) de détection des signes, et des moyens pour déterminer la valeur d'un courant homopolaire (IT) représentatif de la somme vectorielle des courants parcourant les conducteurs à protéger en fonction des signaux représentatifs des courants secondaires redressés et des signaux représentatifs des signes des polarités desdits courants secondaires, la valeur du courant homopolaire étant déterminée en ajoutant ou en soustrayant chaque signal représentatif d'un courant secondaire redressé en fonction de la valeur du signal de signe de polarité associé audit courant secondaire redressé.

2. Déclencheur électronique selon la revendication 1, **caractérisé en ce que** l'ensemble électronique de traitement (4) comporte des moyens (8) de traitement des amplitudes des signaux du courant, le circuit (9) de traitement numérique étant connecté à des sorties (A) des moyens (8) de traitement des amplitudes.

3. Déclencheur électronique selon la revendication 2 **caractérisé en ce que** le circuit (3) de détection et de redressement comporte un groupe de diodes (AN,BN,CN,DN) associées à chaque capteur de courant, connectées en pont redresseur, une première (AN) et une seconde (BN) diode reliées par leurs cathodes à un point positif (Vp) d'une alimentation, une troisième (CN) et une quatrième (DN) diodes connectées par leurs anodes à une résistance de mesure (RN), la première (AN) et la troisième (CN) diodes étant connectées en série et leur point commun étant connecté à une première sortie (PN) du capteur de courant associé (TN), la deuxième (BN) et la quatrième (DN) diodes étant connectées en série et leur point commun étant connecté à une seconde sortie du capteur de courant associé (TN), une des deux sorties du capteur de courant étant reliée aux moyens (10) de détection du signe du courant circulant dans ledit capteur, lesdits moyens de détection fournissant en sortie une première valeur (VSP) si le signe du courant est positif ou une seconde valeur (VSN) si le signe du courant est négatif, le point (MN) commun entre la troisième diode (CN), la quatrième diode (DN) et la résistance de mesure (RN) fournissant un signal représentatif de la valeur absolue du courant.

4. Déclencheur électronique selon l'une des revendications 2 et 3, **caractérisé en ce que** les moyens (10) de détection des signes des courants comportent, pour chaque capteur, un transistor (QN) comportant une électrode de référence connectée à la masse d'une alimentation, une électrode de commande reliée au capteur de courant associé et une électrode de sortie reliée au circuit électronique de traitement (9).

5. Déclencheur électronique selon l'une quelconque des revendications 1 à 4, **caractérisé en ce que** l'ensemble électronique de traitement détermine une valeur instantanée (IT) du courant homopolaire en ajoutant les valeurs des courants des capteurs dont le signe correspondant est positif et en soustrayant les valeurs des courants des capteurs dont le signe correspondant est négatif.

6. Déclencheur selon l'une quelconque des revendications 1 à 5, **caractérisé en ce que** l'ensemble électronique de traitement comporte des moyens (11) de conversion analogique/numérique de manière à échantillonner les valeurs des courants des capteurs, moyens (12) de calcul pour déterminer la valeur d'un échantillon du courant de défaut terre, et des moyens (14) de production d'un signal de déclenchement lorsque la valeur du courant de défaut terre dépasse un seuil pendant un temps prédéterminé.

## Claims

1. An electronic trip device for a multipole electrical circuit breaker for protection of an electrical power system comprising:
- a current sensor per pole supplying a secondary current proportional to a current flowing in an associated conductor of the power system (1) to be protected by the circuit breaker,
- a detection and rectifying circuit (3) to which the secondary currents are applied and supplying signals representative of the currents flowing in the conductors to be protected,
- means for determining a value of an earth fault current signal according to said secondary currents, and
- an electronic processing unit (4) receiving the signals supplied by the detection and rectifying circuit and delivering a tripping order, with or without a time delay, when the currents flowing in the conductors to be protected or an earth fault current exceed preset thresholds,
electronic trip device **characterized in that** the detection and rectifying circuit (3) comprises means for supplying signals (M1, M2, M3, MN) representative of the rectified secondary currents and signals (P1, P2, P3, PN) representative of the signs of the polarities of said secondary currents separately to the processing unit (4), the electronic processing unit comprising means (10) for detecting the signs of the current connected to the detection and rectifying circuit (3) so as to receive the signals representative of the polarity signs of the currents, a numerical processing circuit (9) connected to outputs (S) of said means (10) for detecting the signs, and means for determining the value of an earth fault current (IT) representative of the vector sum of the currents flowing in the conductors to be protected according to the signals representative of the rectified secondary currents and to the signals representative of the signs of the polarities of said secondary currents, the value of the earth fault current being determined by adding or subtracting each signal representative of a rectified secondary current according to the value of the polarity sign signal associated to said rectified secondary current.

2. The electronic trip device according to claim 1 **characterized in that** the electronic processing unit (4) comprises means (8) for processing the amplitudes of the current signals, the numerical processing circuit (9) being connected to outputs (A) of the means (8) for processing the amplitudes.

3. The electronic trip device according to claim 2 **characterized in that** the detection and rectifying circuit (3) comprises a group of diodes (AN, BN, CN, DN) associated to each current sensor, connected as a rectifier bridge, a first (AN) and second (BN) diode connected via their cathodes to a positive point (Vp) of a power supply, a third (CN) and fourth (DN) diode connected via their anodes to a measuring resistor (RN), the first (AN) and third (CN) diode being connected in series and their common point being connected to a first output (PN) of the associated current sensor (TN), the second (BN) and fourth (DN) diode being connected in series and their common point being connected to a second output of the associated current sensor (TN), one of the two outputs of the current sensor being connected to the means (10) for detecting the sign of the current flowing in said sensor, said means for detecting supplying on output a first value (VSP) if the current sign is positive or a second value (VSN) if the current sign is negative, the common point (MN) between the third diode (CN), the fourth diode (DN) and the measuring resistor (RN) supplying a signal representative of the absolute value of the current.

4. The electronic trip device according to either one of the claims 2 and 3 **characterized in that** the means (10) for detecting the current signs comprise, for each sensor, a transistor (QN) comprising a reference electrode connected to the ground of a power supply, a control electrode connected to the associated current sensor and an output electrode connected to the electronic processing circuit (9).

5. The electronic trip device according to any one of the claims 1 to 4 **characterized in that** the electronic processing unit determines an instantaneous value (IT) of the earth fault current by adding the values of the currents from the sensors whose corresponding sign is positive and subtracting the values of the currents from the sensors whose corresponding sign is negative.

6. The trip device according to any one of the claims 1 to 5 **characterized in that** the electronic processing unit comprises analog-to-digital conversion means (11) so as to sample the values of the currents from the sensors, computing means (12) to determine the value of a sample of the earth fault current, and means (14) for producing a tripping signal when the value of the earth fault current exceeds a threshold for a preset time.

## Patentansprüche

1. Elektronischer Auslöser für einen Mehrpol-Leistungsschalter zum Schutz eines elektrischen Leitungsnetzes mit
- einem Stromwandler pro Pol, der einen Sekundärstrom liefert, welcher einem, einen zugeordneten Leiter des durch den Leistungsschalter zu schützenden Netzes (1) durchfließenden Strom proportional ist,
- einer Erfassungs- und Gleichrichterschaltung (3), die mit den Sekundärströmen beaufschlagt wird und die Ströme in den zu schützenden Leitern abbildende Signale liefert,
- Mitteln zur Bestimmung eines Wertes eines Erdschlußstromsignals in Abhängigkeit von den genannten Sekundärströmen,
- einer elektronischen Verarbeitungsschaltung (4), die mit den von der Erfassungs- und Gleichrichterschaltung gelieferten Signalen beaufschlagt wird und einen, verzögerten oder unverzögerten Auslösebefehl erteilt, wenn die in den zu schützenden Leitern fließenden Ströme oder ein Erdschlußstrom bestimmte Ansprechwerte überschreiten,
**dadurch gekennzeichnet, daß** die Erfassungs- und Gleichrichterschaltung (3) Mittel umfaßt, um die elektronische Verarbeitungsschaltung (4) mit getrennten, die gleichgerichteten Sekundärströme abbildenden Signalen (Ml, M2, M3, MN) bzw. die Polaritäten der genannten Sekundärströme abbildenden Signalen (P1, P2, P3, PN) zu beaufschlagen, wobei die elektronische Verarbeitungsschaltung an die Erfassungs- und Gleichrichterschaltung (3) angeschlossene Mittel (10) zur Erfassung der Strompolaritäten aufweist, um die die Strompolaritäten abbildenden Signale zu erhalten, und eine an Ausgänge (S) der genannten Mittel (10) zur Polaritätserfassung angeschlossene digitale Verarbeitungsschaltung (9) sowie Mittel zur Bestimmung des Werts eines Erdschlußstroms (IT) umfaßt, der die Vektorsumme der die zu schützenden Leiter durchfließenden Ströme in Abhängigkeit von den die gleichgerichteten Ströme abbildenden Signalen und den die Polaritäten der genannten Sekundärströme abbildenden Signalen abbildet, wobei zur Bestimmung des Werts des Erdschlußstroms jedes einen gleichgerichteten Sekundärstrom abbildende Signal in Abhängigkeit vom Wert des dem genannten gleichgerichteten Sekundärstrom zugeordneten Polaritätssignals hinzuaddiert bzw. subtrahiert wird.

2. Auslöser nach Anspruch 1, **dadurch gekennzeichnet, daß** die elektronische Verarbeitungsschaltung (4) Mittel (8) zur Verarbeitung der Amplituden der Stromsignale umfaßt und die digitale Verarbeitungsschaltung (9) an Ausgänge (A) der Mittel (8) zur Amplitudenverarbeitung angeschlossen ist.

3. Auslöser nach Anspruch 2, **dadurch gekennzeichnet, daß** die Erfassungs- und Gleichrichterschaltung (3) eine Gruppe von den einzelnen Stromwandlern zugeordneten, als Gleichrichterbrücke geschalteten Dioden (AN, BN, CN, DN) umfaßt, wobei eine erste (AN) und eine zweite Diode (BN) über ihre Kathoden an einen positiven Pol (Vp) einer Stromversorgungsschaltung sowie eine dritte (CN) und eine vierte Diode (DN) über ihre Anoden an einen Meßwiderstand (RN) angeschlossen sind, die erste (AN) und die dritte Diode (CN) in Reihe geschaltet und ihr gemeinsamer Anschlußpunkt mit einem ersten Ausgang (PN) des zugeordneten Stromwandlers (TN) verbunden sind, die zweite (BN) und die vierte Diode (DN) in Reihe geschaltet und ihr gemeinsamer Anschlußpunkt mit einem zweiten Ausgang des zugeordneten Stromwandlers (TN) verbunden sind, einer der beiden Ausgänge des Stromwandlers an die Mittel zur Erfassung der Polarität des den genannten Stromwandler durchfließenden Stroms angeschlossen ist, die genannten Erfassungsmittel an ihrem Ausgang einen ersten Wert (VSP) bereitstellen, wenn die Polarität des Stroms positiv ist, bzw. einen zweiten Wert (VSP) bereitstellen, wenn die Polarität des Stroms negativ ist, und am gemeinsamen Anschlußpunkt (MN) zwischen der dritten Diode (CN), der vierten Diode (DN) und dem Meßwiderstand (RN) ein den Absolutwert des Stroms abbildendes Signal bereitgestellt wird.

4. Auslöser nach Anspruch 2 oder 3, **dadurch gekennzeichnet, daß** die Mittel (10) zur Erfassung der Polarität der Ströme pro Stromwandler einen Transistor (QN) mit einer an das Massepotential einer Stromversorgungsschaltung angeschlossenen Bezugselektrode umfassen, wobei eine Steuerelektrode an den zugeordneten Stromwandler angeschlossen und eine Ausgangselektrode mit der digitalen Verarbeitungsschaltung (9) verbunden ist.

5. Auslöser nach irgendeinem der Ansprüche 1 bis 4, **dadurch gekennzeichnet, daß** die elektronische Verarbeitungsschaltung einen Momentanwert (IT) des Erdschlußstroms bestimmt, indem sie die Werte der Stromwandlerströme mit positiver Polarität hinzuaddiert und die Werte der Stromwandlerströme mit negativer Polarität subtrahiert.

6. Auslöser nach irgendeinem der Ansprüche 1 bis 5, **dadurch gekennzeichnet, daß** die elektronische Verarbeitungsschaltung Mittel (11) zur Analog/Digital-Umwandlung mit Abtastung der Werte der die Stromwandler durchfließenden Ströme, Berechnungsmittel (12) zur Bestimmung eines Abtastwerts des Erdschlußstroms sowie Mittel (14) zur Erzeugung eines Auslösesignals umfaßt, wenn der Wert des Erdschlußstroms während einer festgelegten Zeit einen bestimmten Ansprechwert überschreitet.
